# EUROPEAN PATENT APPLICATION

(11) **EP 2 772 849 A1**
(43) Date of publication of application: **03.09.2014**
(21) Application number: 13275140.5
(22) Date of filing: 11.06.2013
(51) Int. Cl.: G06F 3/147, G06F 1/00, G06K 17/00

(54) **Electronic shelf label and method of controlling the same**

(30) Priority: 28.02.2013 KR 20130022091
(71) Applicant: Samsung Electro-Mechanics Co., Ltd, Suwon, Gyunggi-Do (KR)
(72) Inventor: Woo, Sa Im, Gyunggi-do (KR); Woo, Seok Min, Gyunggi-do (KR); Byun, Gi Young, Gyunggi-do (KR)
(74) Representative: Potter Clarkson LLP

(57) **Abstract**

There are provided an electronic shelf label and a method of controlling the same. The electronic shelf label according to an embodiment of the present invention includes: a power supply unit supplying driving power; an interrupt signal generation unit generating an interrupt signal using an input signal from the outside; and a processor unit generating display information depending on the interrupt signal, wherein the processor unit controls the power supply unit depending on the interrupt signal to determine whether to supply the driving power to the interrupt signal generation unit or interrupt the driving power.

## Description

### CROSS-REFERENCE TO RELATED APPLICATIONS

This application claims the priority of Korean Patent Application No. 10-2013-0022091 filed on February 28, 2013, in the Korean Intellectual Property Office, the disclosure of which is incorporated herein by reference.

### BACKGROUND OF THE INVENTION

### Field of the Invention

The present invention relates to an electronic shelf label capable of preventing unnecessary power consumption in an interrupt signal generation unit generating an interrupt signal to save power consumption and a method of controlling the same.

### Description of the Related Art

Generally, an electronic shelf label (ESL) is an electronic display device for replacing a tag displaying product information (for example, the price of a product) on a display shelf within a shop. The electronic shelf label may include a display device (formed of an LCD, electronic paper, or the like), a unit for visually displaying product information, and a communications device that receives and processes data containing variable product information.

Many different kinds of products may be displayed within a shop in which the electronic shelf label is installed, such that a regular external power supply may not be able to be connected to all the electronic shelf labels. Therefore, the electronic shelf label is generally powered using a portable battery.

In an electronic shelf labeling system, an important concern is related to stably displaying product information. In configuring the electronic shelf label, important hardware considerations are a casing size, manufacturing costs, and positions of communications devices, such as antennas, and the like. The casing needs to have a size and a volume sufficient for a customer to easily view the display information while preventing an electronic shelf label from covering products. Further, the casing size needs to be set to considerably reduce interruption of communications while reducing manufacturing costs.

Most electronic shelf labels use a small coin-shaped battery of which the service rating is low, due to the restrictions and requirements thereof. The service rating of such a small battery is limited due to limitations of a physical volume thereof and a chemical material used therein.

In addition, the small battery may be self-discharged for a predetermined period and is affected by the use environment temperature. Further, when the small battery supplies a required amount of energy, an instant voltage drop may occur due to the limitation of battery ratings. As a result, the effective lifespan of the small battery is greatly affected by a combination of various factors. In addition, a deviation in the lifespan of available energy is greatly different, depending on an initial state, an operational frequency and method, service conditions, and the like.

Recently, in order to solve the above detailed issues, technologies for reducing energy consumption in small batteries used in electronic shelf labels have been developed in various manners.

The following Patent Document 1 relates to an electronic shelf labeling system having a wake up function which groups a plurality of electronic shelf labels within a shop to effectively operate the electronic shelf labels in a wake up scheme. Patent Document 1 discloses reducing power consumption by grouping the electronic shelf labels to operate the electronic shelf labels in a wake up scheme, but does not disclose a feature of reducing power consumed in the electronic shelf labels by sensing a duration of an interrupt signal.

### [Related Art Document]

(Patent Document 1) Korean Patent Laid-Open Publication No. 10-2010-0048205

### SUMMARY OF THE INVENTION

An aspect of the present invention provides an electronic shelf label capable of interrupting driving power supplied to an interrupt signal generation unit generating an interrupt signal when the interrupt signal generated by an input signal received from the outside continues beyond a threshold time, and a controlling method thereof.

According to an aspect of the present invention, there is provided an electronic shelf label, including: a power supply unit supplying driving power; an interrupt signal generation unit generating an interrupt signal using an input signal from the outside; and a processor unit generating display information depending on the interrupt signal, wherein the processor unit controls the power supply unit depending on the interrupt signal to determine whether to supply the driving power to the interrupt signal generation unit or interrupt the driving power.

The processor unit may control the power supply unit to interrupt the supply of the driving power to the interrupt signal generation unit after a preset first threshold time from a time of generation of the interrupt signal when the interrupt signal continues for the first threshold time.

The processor unit may control the power supply unit to supply the driving power to the interrupt signal generation unit after a preset second threshold time from a time of interruption of the driving power supplied to the interrupt signal generation unit when the supply of the driving power to the interrupt signal generation unit is interrupted.

The electronic shelf label may further include a display unit outputting an image depending on the display information.

According to another aspect of the present invention, there is provided a method of controlling an electronic shelf label including an interrupt signal generation unit generating an interrupt signal, the method including: generating the interrupt signal depending on an input signal; and interrupting driving power supplied to the interrupt signal generation unit depending on a duration of the interrupt signal.

In the interrupting of the driving power, the driving power supplied to the interrupt signal generation unit may be interrupted after a preset first threshold time from a time of generation of the interrupt signal when the interrupt signal continues for the first threshold time.

The method may further include supplying the driving power to the interrupt signal generation unit after a preset second threshold time from a time of interruption of the driving power supplied to the interrupt signal generation unit when the driving power supplied to the interrupt signal generation unit is interrupted.

According to another aspect of the present invention, there is provided an electronic shelf label, including: a power supply unit supplying driving power; an interrupt signal generation unit generating an interrupt signal using an input signal from the outside; and a control unit controlling the power supply unit depending on the interrupt signal to determine whether to supply the driving power to the interrupt signal generation unit or interrupt the driving power.

The power supply unit may include: a driving power supply terminal generating the driving power; and a power switch disposed between the driving power supply terminal and the interrupt signal generation unit.

The control unit may generate a control signal controlling a switching operation of the power switch depending on a duration of the interrupt signal.

The control unit may include: a logic operator receiving the interrupt signal and the control signal; and a time delayer delaying a signal output from the logic operator for a preset delay time to generate the control signal.

The logic operator may receive the interrupt signal and the control signal to perform a NAND operation.

The interrupt signal generation unit may include: an interrupt switch turned on when the input signal is applied; and an interrupt resistor disposed between the interrupt switch and a ground to generate the interrupt signal when the interrupt switch is turned on.

The interrupt switch may include at least one of a push-button switch and a reed switch.

### BRIEF DESCRIPTION OF THE DRAWINGS

The above and other aspects, features and other advantages of the present invention will be more clearly understood from the following detailed description taken in conjunction with the accompanying drawings, in which:
FIG. 1 is a conceptual diagram illustrating an electronic shelf labeling system according to an embodiment of the present invention;
FIG. 2 is a block diagram illustrating an electronic shelf label according to an embodiment of the present invention;
FIG. 3 is a graph illustrating power consumed in the electronic shelf label according to the embodiment of the present invention;
FIG. 4 is a flowchart illustrating a method of controlling the electronic shelf label according to the embodiment of the present invention; and
FIG. 5 is a circuit diagram schematically illustrating an electronic shelf label according to another embodiment of the present invention.

### DETAILED DESCRIPTION OF THE EMBODIMENTS

Hereinafter, embodiments of the present invention will be described in detail with reference to the accompanying drawings.

The invention may, however, be embodied in many different forms and should not be construed as being limited to the embodiments set forth herein. Rather, these embodiments are provided so that this disclosure will be thorough and complete, and will fully convey the scope of the invention to those skilled in the art.

Throughout the drawings, the same or like reference numerals will be used to designate the same or like elements.

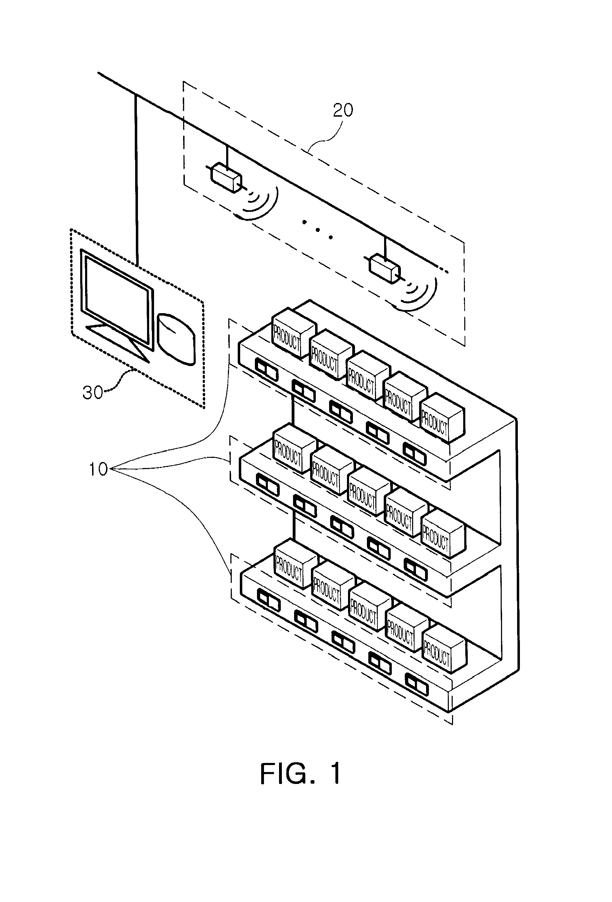

FIG. 1 is a conceptual diagram illustrating an electronic shelf labeling system according to an embodiment of the present invention.

Referring to FIG. 1, the electronic shelf labeling system may include a plurality of electronic shelf labels 10, a communications device 20, and a management server 30.

Each of the plurality of electronic shelf labels 10 may display corresponding product information. The product information may include information such as product price, a product expiration date, remaining product stock, and the like.

The communications device 20 may communicate with the plurality of electronic shelf labels 10, respectively, in a wireless manner and communicate with the management server 30 in a wired or wireless manner to serve to relay information between the electronic shelf labels and the management server 30. That is, the plurality of electronic shelf labels 10 and the management server 30 may transmit and receive data and signals through the communications devices 20.

The management server 30 may include a database to store data including product information corresponding to each of the plurality of electronic shelf labels 10, information on the electronic shelf labels, and general management information, and transmit the data to the plurality of electronic shelf labels 10 through the communications devices 20.

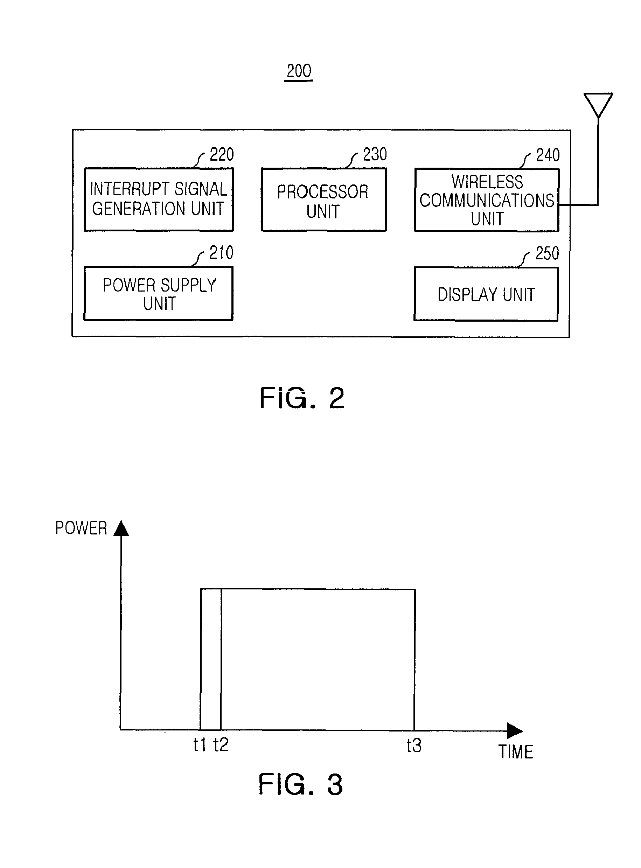

Hereinafter, the electronic shelf labels adopted in the electronic shelf labeling system will be described in detail with reference to FIGS. 2 through 4.

FIG. 2 is a block diagram illustrating an electronic shelf label according to an embodiment of the present invention.

Referring to FIG. 2, an electronic shelf label 200 according to an embodiment of the present invention may include a power supply unit 210, an interrupt signal generation unit 220, a processor unit 230, a wireless communications unit 240, and a display unit 250. Each component is divided, based on a main role thereof, and hardware configurations do not need to be separated. In actuality, a plurality of components may be configured in a single integrated circuit with the development of technology. For example, the processor unit 230 and the wireless communications unit 240 may be configured in an integrated circuit (IC).

The power supply unit 210 may supply power to each component of the electronic shelf label 200, that is, the interrupt signal generation unit 220, the processor unit 230, the display unit 240, and the wireless communications unit 250. In general, the power supply unit 210 supplies power to each component of the electronic shelf label 200 in a current form.

The interrupt signal generation unit 220 generates an interrupt signal using an input signal from the outside.

For example, at the time of shipping the electronic shelf label 200 from a factory and installing the electronic shelf label 200 within a shop, in the case in which the electronic shelf label 200 is registered in the electronic shelf labeling system, the case in which communications start forcibly due to a malfunction of the electronic shelf label 200, the case in which a battery used in the electronic shelf label 200 is replaced and then the communications of the initialized electronic shelf label 200 start, and the like, a user directly transmits the input signal to the electronic shelf label 200. In this case, when the input signal is transmitted to the interrupt signal generation unit 220, the interrupt signal generation unit 220 generates the interrupt signal.

The above-mentioned interrupt signal generation unit 220 may be provided as a push-button switch, a reed switch, or the like. In the case of the push-button switch, the input signal from the outside may correspond to physical force, and in the case of the reed switch, the input signal may correspond to electromagnetic force.

However, since the interrupt signal generation unit 220 provided as the push-button switch, the reed switch, and the like, generates the interrupt signal with the direct input signal, the interrupt signal generation unit 220 has advantages in that the configuration thereof may be simple and the operation thereof may be intuitive, but has a problem in that power consumption may increase due to the interrupt signal generated for the same time as the time of application of the input signal. In particular, the above-mentioned problem may generally be more serious in the case of an electronic shelf label in which a small battery is adopted.

In order to address the above-mentioned problem, the processor unit 230 may control the power supply unit 210 depending on the interrupt signal to determine whether to supply or interrupt the driving power to the interrupt signal generation unit 220.

That is, the processor unit 230 may receive the interrupt signal generated from the interrupt signal generation unit 220 to perform information processing, and the like, corresponding to the interrupt signal, and the processor unit 230 may perform an operation for reducing unnecessary power consumption when the interrupt signal continues, even after the processor unit 230 receives the interrupt signal to recognize that the interrupt signal has been generated. That is, when the interrupt signal continues even after the processor unit 230 recognizes that the interrupt signal has been generated, the processor unit 230 may control the power supply unit 210 to interrupt the driving power supplied to the interrupt signal generation unit 220.

For example, when the processor unit 230 sets the required time to recognize the generation of the interrupt signal to a first threshold time, the processor unit 230 may interrupt the supply of the driving power to the interrupt signal generation unit 220 when the interrupt signal continues for the first threshold time.

FIG. 3 is a graph illustrating power consumed in the electronic shelf label according to the embodiment of the present invention. Hereinafter, the embodiment of the present invention will be described with reference to FIGS. 2 and 3.

In the case that the input signal is transmitted to the electronic shelf label 200 from the outside at time t1 and continues to time t3, the interrupt signal is generated for the period t1 to t3, such that power may be consumed in the electronic shelf label.

In the case that the processor unit 230 sets the first threshold time, the time required to recognize the generation of the interrupt signal, to the time corresponding to the period t1 to t2, the period t2 to t3 corresponds to the period in which unnecessary power is consumed. When the interrupt signal continues for the first threshold time (in FIG. 3, the time corresponding to the period t1 to t2), the processor unit 230 may interrupt the supply of the driving power to the interrupt signal generation unit 220 to prevent unnecessary power from being consumed.

Referring back to FIG. 2, the processor unit 230 may control the power supply unit 210 to supply the driving power to the interrupt signal generation unit 220 after a preset second threshold time from a time of the interruption of the supply of the driving power to the interrupt signal generation unit 220. The second threshold time is time enough to remove the direct input signal by physical force or the electromagnetic force and may be changed by a user.

The wireless communications unit 240 may communicate with the communications device 20 of FIG. 1 wirelessly to receive data and signals transmitted from the management server 30 through the communications device 20. The data may include information, such as product price, product expiration date, remaining product stock, and the like, and the signal may include a wake up signal, an update signal, and the like.

The display unit 250 may output an image depending on the display information transmitted from the processor unit 230. The processor unit 230 may perform information processing, and the like, depending on the interrupt signal transmitted from the interrupt signal generation unit 220 and the data and signal transmitted from the wireless communications unit to generate the display information and provide the generated display information to the display unit 250.

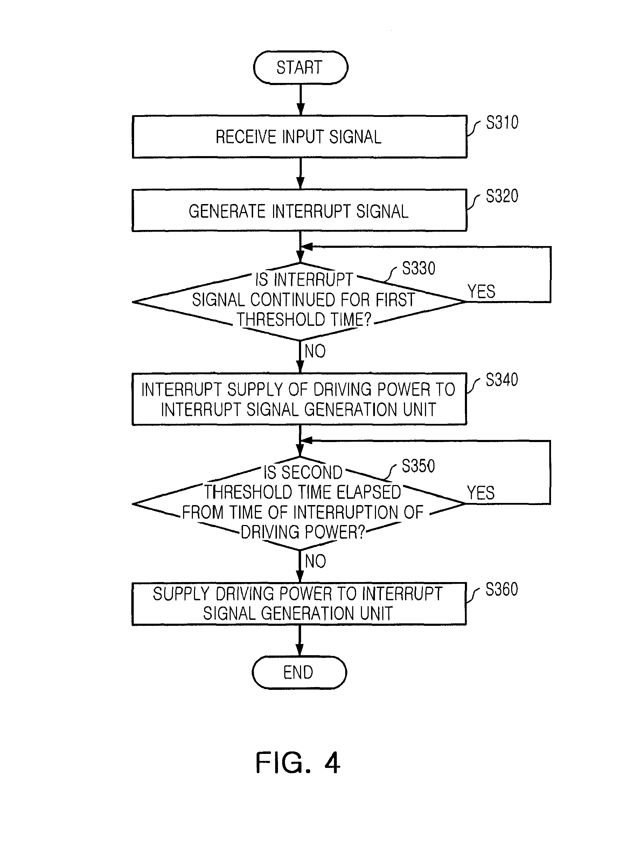

FIG. 4 is a flowchart illustrating a method of controlling the electronic shelf label according to the embodiment of the present invention. The method of controlling an electronic shelf label according to the embodiment of the present invention will be described with reference to FIGS. 2 and 4.

When a direct input signal is received by physical force, electromagnetic force, and the like (S310), the interrupt signal generation unit 220 generates an interrupt signal. In this case, the interrupt signal generation unit 220 may generate the interrupt signal for the same time as the time when the input signal is received (S320).

The processor unit 230 determines whether the interrupt signal continues for a first threshold time required to recognize the generation of the interrupt signal (S330), and if it is determined that the interrupt signal continues for the first threshold time, controls the power supply unit 210 to interrupt the supply of driving power to the interrupt signal generation unit 220 (S340).

Next, the processor unit 230 determines whether a second threshold time from the time of the interruption of the supply of the driving power to the interrupt signal generation unit 220 (S350) has elapsed, and if it is determined that the second threshold time has elapsed, controls the power supply unit 210 to supply the driving power to the interrupt signal generation unit 220.

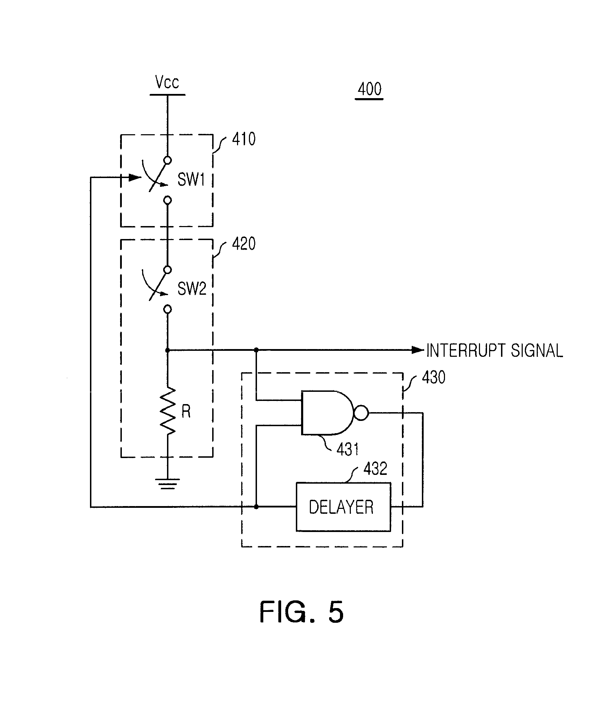

FIG. 5 is a circuit diagram schematically illustrating an electronic shelf label according to another embodiment of the present invention. Referring to FIG. 5, an electronic shelf label 400 according to another embodiment of the present invention may include a power supply unit 410, an interrupt signal generation unit 420, and a control unit 430 and although not illustrated, may further include a processor unit performing information processing, and the like, depending on an interrupt signal, a wireless communications unit, and a display unit.

FIG. 5 illustrates that the power supply unit 410 supplies driving power to the interrupt signal generation unit 420, which is only schematically illustrated, and the power supply unit 410 may supply the driving power to each component of the electronic shelf label 400.

The power supply unit 410 may include a driving power supply terminal Vcc generating the driving power and a power switch SW1 disposed between the driving power supply terminal Vcc and the interrupt signal generation unit 420. The driving power supply terminal Vcc corresponds to a small battery adopted in the electronic shelf label.

The interrupt signal generation unit 420 generates the interrupt signal by an input signal from the outside, and may include an interrupt switch SW2 and an interrupt resistor R. The interrupt switch SW2 is connected to the power supply unit 410 and the interrupt resistor R is disposed between the interrupt switch SW2 and a ground.

The interrupt switch SW2 may be provided as a push-button switch, a reed switch, or the like, and is turned on when the input signal, such as physical force, electromagnetic force, and the like, is received from the outside. When the interrupt switch SW2 is turned on, the interrupt signal is generated from the interrupt resistor R.

The control unit 430 may control the power supply unit 410 depending on the interrupt signal to determine the supply or interruption of the driving power to the interrupt signal generation unit 420. The control unit 430 generates a control signal controlling a switching operation of the power switch SW1 depending on the duration of the interrupt signal.

The control unit 430 may include a logic operator 431 and a time delayer 432, and the logic operator 431 may perform a NAND operation. That is, the logic operator 431 may include a 2-input NAND gate that receives the interrupt signal and the control signal. A signal output from the logic operator 431 is transmitted to the time delayer 432 and the time delayer 432 delays the output signal of the logic operator 431 for a preset delay time to generate the control signal.

Hereinafter, when the interrupt signal is generated, a level of the interrupt signal is referred to as a high level and when the interrupt signal is not generated, the level of the interrupt signal is referred to as a low level. In this condition, the operation of the electronic shelf label according to another embodiment of the present invention will be described in detail.

When an input signal is not received from the outside, the interrupt switch SW2 is in a turn-off operational state to transmit a low level interrupt signal to the logic operator 431, such that the logic operator 431 outputs a high level signal and the time delayer 432 delays the output signal of the logic operator 431 for a delay time to output a high level control signal. The power switch SW1 to which the high level control signal is applied maintains a turn-on operational state.

When an input signal is received from the outside, the interrupt switch SW2 is turned on and a current path of driving power supply terminal Vcc - power switch SW1 - interrupt switch SW2 - interrupt resistor R is formed to generate a high level interrupt signal. In this case, the logic operator 431 to which the high level interrupt signal and the high level control signal are applied outputs a low level signal. The low level output signal from the logic operator 431 is delayed by the time delayer 432 and is transmitted to the power switch SW1 as a control signal after the delay time. That is, prior to the delay time, the power switch SW1 maintains a turn-on operational state, and after the delay time, is switched to a turnoff operational state.

After the delay time, the power switch SW1 is in the turnoff operational state, and thus the current path is disconnected to transmit the low level interrupt signal to the logic operator 431, such that the logic operator 431 generates the high level output signal. In this case, the time delayer 432 delays the high level output signal of the logic operator 431 for the delay time to generate the control signal. That is, the power switch SW1 may be switched to the turn-off operational state and switched to the turn-on operational state again after the delay time.

As set forth above, according to embodiments of the invention, power consumption can be reduced by interrupting driving power supplied to an interrupt signal generation unit generating an interrupt signal when the interrupt signal generated by an input signal received from the outside continues beyond a threshold time.

While the present invention has been shown and described in connection with the embodiments, it will be apparent to those skilled in the art that modifications and variations can be made without departing from the spirit and scope of the invention as defined by the appended claims.

## Claims

1. An electronic shelf label, comprising:
a power supply unit supplying driving power;
an interrupt signal generation unit generating an interrupt signal using an input signal from the outside; and
a processor unit generating display information depending on the interrupt signal,
wherein the processor unit controls the power supply unit depending on the interrupt signal to determine whether to supply the driving power to the interrupt signal generation unit or interrupt the driving power.

2. The electronic shelf label of claim 1, wherein the processor unit controls the power supply unit to interrupt the supply of the driving power to the interrupt signal generation unit after a preset first threshold time from a time of generation of the interrupt signal when the interrupt signal continues for the first threshold time.

3. The electronic shelf label of claim 1, wherein the processor unit controls the power supply unit to supply the driving power to the interrupt signal generation unit after a preset second threshold time from a time of interruption of the driving power supplied to the interrupt signal generation unit when the supply of the driving power to the interrupt signal generation unit is interrupted.

4. The electronic shelf label of claim 1, further comprising a display unit outputting an image depending on the display information.

5. A method of controlling an electronic shelf label including an interrupt signal generation unit generating an interrupt signal, comprising:
generating the interrupt signal depending on an input signal; and
interrupting driving power supplied to the interrupt signal generation unit depending on a duration of the interrupt signal.

6. The method of claim 5, wherein in the interrupting of the driving power, the driving power supplied to the interrupt signal generation unit is interrupted after a preset first threshold time from a time of generation of the interrupt signal when the interrupt signal continues for the first threshold time.

7. The method of claim 6, further comprising supplying the driving power to the interrupt signal generation unit after a preset second threshold time from a time of interruption of the driving power supplied to the interrupt signal generation unit when the driving power supplied to the interrupt signal generation unit is interrupted.

8. An electronic shelf label, comprising:
a power supply unit supplying driving power;
an interrupt signal generation unit generating an interrupt signal using an input signal from the outside; and
a control unit controlling the power supply unit depending on the interrupt signal to determine whether to supply the driving power to the interrupt signal generation unit or interrupt the driving power.

9. The electric shelf label of claim 8, wherein the power supply unit includes:
a driving power supply terminal generating the driving power; and
a power switch disposed between the driving power supply terminal and the interrupt signal generation unit.

10. The electric shelf label of claim 9, wherein the control unit generates a control signal controlling a switching operation of the power switch depending on a duration of the interrupt signal.

11. The electric shelf label of claim 10, wherein the control unit includes:
a logic operator receiving the interrupt signal and the control signal; and
a time delayer delaying a signal output from the logic operator for a preset delay time to generate the control signal.

12. The electric shelf label of claim 11, wherein the logic operator receives the interrupt signal and the control signal to perform a NAND operation.

13. The electric shelf label of claim 8, wherein the interrupt signal generation unit includes:
an interrupt switch turned on when the input signal is applied; and
an interrupt resistor disposed between the interrupt switch and a ground to generate the interrupt signal when the interrupt switch is turned on.

14. The electric shelf label of claim 13, wherein the interrupt switch includes at least one of a push-button switch and a reed switch.
